# FASCICULE DE BREVET EUROPEEN

(11) **EP 4 080 177 B1**
(45) Date de publication et mention de la délivrance du brevet: **07.06.2023**
(21) Numéro de dépôt: 22167543.2
(22) Date de dépôt: 11.04.2022
(51) Int. Cl.: G01H 3/12

(54) **PROCÉDÉ ET SYSTÈME DE CONTRÔLE DU NIVEAU SONORE MAXIMAL LIÉ AU DÉPLACEMENT D'UN VÉHICULE**
VERFAHREN UND SYSTEM ZUR KONTROLLE DES MAXIMALEN GERÄUSCHPEGELS IN VERBINDUNG MIT DER BEWEGUNG EINES FAHRZEUGS
METHOD AND SYSTEM FOR CONTROLLING THE MAXIMUM NOISE LEVEL RELATED TO THE MOVEMENT OF A VEHICLE

(30) Priorité: 22.04.2021 FR 2104205
(43) Date de publication de la demande: 26.10.2022
(73) Titulaire: Micro DB, 69130 Ecully (FR)
(72) Inventeur: PINEL, Lucille, 69480 Lachassagne (FR); LEPERCQUE, Fabien, 69290 Saint Genis Les Ollières (FR)
(74) Mandataire: Germain Maureau

(56) Documents cités:
- FR-A1- 3 077 886
- US-A- 5 878 367
- AGHA APOORV ET AL: "Noisy vehicle surveillance camera: A system to deter noisy vehicle in smart city", APPLIED ACOUSTICS, ELSEVIER PUBLISHING, GB, vol. 117, 15 juin 2016 (2016-06-15), pages 236-245, XP029820601, ISSN: 0003-682X, DOI: 10.1016/J.APACOUST.2016.05.025

## Description

L'invention concerne un procédé et un système pour contrôler le niveau sonore maximal lié au déplacement d'un véhicule.

L'invention s'applique à la gestion du niveau de bruit dans une zone concernée, à titre expérimental, informatif ou pour s'assurer du respect des normes en la matière. L'invention peut par exemple être mise en oeuvre en bord de route ou de rue pour contrôler le bruit lié au trafic routier, ou en bord de piste d'aéroport, pour contrôler le bruit généré par les avions au décollage ou à l'atterrissage.

Des procédés et systèmes à cet effet sont déjà connus. Le document US5878367 divulgue un procédé pour contrôler le niveau sonore maximal, en un point de contrôle, lié au déplacement d'un véhicule sur une trajectoire dans une zone de mesure située à proximité du point de contrôle. Le procédé comprend les phases suivantes : a) une phase de mesure, pendant une durée de mesure couvrant sensiblement la période où le véhicule se déplace dans la zone de mesure, dans laquelle, à chaque instant t' d'une série discrète d'instants successifs, on acquiert une donnée acoustique de la zone de mesure au moyen d'une antenne acoustique comprenant une pluralité de capteurs de pression acoustique ; b) une phase de traitement des données acoustiques acquises, dans laquelle on calcule l'évolution du niveau sonore au point de contrôle pendant la durée de mesure, ce calcul comprenant le calcul d'une distribution de sources sonores équivalentes le long de la trajectoire du véhicule sur l'ensemble de la zone de mesure ; puis la propagation au point de contrôle uniquement des sources sonores équivalentes situées dans une zone cible qui est incluse dans la zone de mesure, située en face de l'antenne acoustique et qui présente une dimension le long de la trajectoire ; par un traitement de beamforming et de déconvolution.

Cependant, un inconvénient majeur de l'art antérieur réside dans la précision des informations obtenues. En particulier, il existe une difficulté à isoler le bruit généré par un véhicule donné des autres bruits environnants. Ceci est problématique, surtout lorsque le contrôle du niveau sonore se traduit par une verbalisation du véhicule dépassant le seuil autorisé.

L'invention vise à remédier à cet inconvénient, par un procédé et un système fournissant des résultats plus fiables.

Selon un premier aspect, l'invention concerne un procédé pour contrôler le niveau sonore maximal (Imax), en un point de contrôle, lié au déplacement d'un véhicule sur une trajectoire dans une zone de mesure située à proximité du point de contrôle. Le procédé comprend les phases suivantes :
- une phase de détection dans laquelle, au moyen d'une première caméra, on détecte un objet mobile dans une zone d'identification située dans ou au moins partiellement en amont de la zone de mesure et on détermine si l'objet mobile détecté est un véhicule ;
- une phase de déclenchement dans laquelle, si l'objet mobile détecté est identifié comme étant un véhicule, et si le véhicule atteint un plan de référence qui est situé, sur la trajectoire, à proximité immédiate du point de contrôle, on déclenche automatiquement une phase de mesure ;

- une phase de mesure, pendant une durée de mesure couvrant sensiblement la période où le véhicule se déplace dans la zone de mesure, dans laquelle :
   -- à au moins un instant t_{R} correspondant sensiblement à l'instant où le véhicule atteint le plan de référence, on acquiert une donnée visuelle de la zone de mesure au moyen d'une deuxième caméra ;
   -- et, à chaque instant t' d'une série discrète d'instants successifs, on acquiert une donnée acoustique de la zone de mesure au moyen d'une antenne acoustique comprenant une pluralité de capteurs de pression acoustique ;
- une phase de traitement des données acoustiques acquises, dans laquelle :
   -- on calcule l'évolution du niveau sonore au point de contrôle pendant la durée de mesure, ce calcul comprenant :
      --- le calcul d'une distribution de sources sonores équivalentes le long de la trajectoire du véhicule sur l'ensemble de la zone de mesure ;
      --- puis la propagation uniquement des sources sonores équivalentes situées dans une zone cible qui est incluse dans la zone de mesure, située en face de l'antenne acoustique et qui présente une dimension - le long de la trajectoire - de l'ordre de 1 à 3 fois la dimension du véhicule ;
         par un traitement de beamforming (formation de voies) et de déconvolution ;
   -- et on détermine le niveau sonore maximal (Imax) au point de contrôle, sensiblement à l'instant (t_{R}) ;
- une phase de validation dans laquelle on détermine, sur la donnée visuelle acquise à l'instant t_{R} si, dans la zone cible, on a bien un et un seul véhicule présent.

De façon concrète, la phase de mesure est effectuée automatiquement pour tout véhicule qui est détecté et qui, de plus, atteint le plan de référence c'est-à-dire en pratique qui passe devant le point de contrôle, et de préférence sans temporisation. La durée de mesure est de préférence prédéterminée, en fonction de la longueur de la zone de mesure et des conditions de vitesse du véhicule, pour permettre les mesures au moins tant que le véhicule est dans la zone de mesure.

Le fait de ne déclencher la phase de mesure que lorsque le véhicule atteint le plan de référence permet notamment de ne pas tenir compte des cas où le véhicule s'est arrêté avant de se trouver face à l'antenne.

En pratique, les notions de « plan de référence situé à proximité immédiate du point de contrôle » et de « véhicule qui atteint le plan de référence » signifient que le véhicule passe en face de l'antenne, avec une faible tolérance temporelle, correspondant à un faible déplacement du véhicule.

La phase de mesure inclut l'acquisition d'une donnée visuelle au moins à l'instant (t_{R}). Il peut s'agir d'une acquisition de mesure ponctuelle, c'est-à-dire la prise d'une photographie sensiblement lorsque le véhicule atteint le plan de référence, ou d'une acquisition vidéo, c'est-à-dire sensiblement en continu, du moins à chaque instant t d'une série discrète d'instants successifs.

La phase de mesure inclut également l'acquisition de données acoustiques. La phase de mesure consécutive à la phase de déclenchement ne débute donc pas nécessairement lorsque le véhicule est au début de la zone de mesure. Toutefois, il peut être prévu de réaliser une acquisition acoustique sensiblement en continu, avec un système de buffer gardant en mémoire les données passées sur une période par exemple voisine de 1,5 s, si bien que les données acoustiques sont disponibles pour l'ensemble de la zone de mesure, y compris avant la phase de déclanchement. Ceci permet de mener de façon appropriée la phase ultérieure de traitement.

Sur la base du diagramme temporel du niveau sonore, que l'on obtient à l'issue de la phase de traitement, est déterminé le niveau sonore maximal (Imax) au point de contrôle. Ce niveau sonore maximal est lié au déplacement du véhicule : il inclut le niveau sonore maximal émis par le véhicule, c'est-à-dire généré uniquement par le véhicule, ainsi que le bruit ambiant (généré par d'autres véhicules, par un bruit de fond, etc.). Ainsi, en l'absence de bruit ambiant, le niveau sonore maximal (Imax) correspond au niveau sonore maximal généré uniquement par le passage du véhicule. De façon concrète, le niveau sonore maximal est atteint lorsque le véhicule passe sensiblement devant le point de contrôle, par exemple sensiblement en face de l'antenne, soit sensiblement à l'instant (t_{R}).

La phase de validation, qui utilise les données visuelles acquises pendant la phase de mesure, permet d'écarter les cas suivants, où le niveau sonore maximal ne peut être attribué au véhicule seul sans risquer de commettre une erreur :
- si aucun véhicule n'est visible dans la zone cible à l'instant (t_{R}), le bruit mesuré provient au moins en partie d'une autre source que le véhicule détecté ;
- si plusieurs véhicules sont visibles dans la zone cible à l'instant (t_{R}), en particulier lorsque deux véhicules se croisent ou se doublent à ce moment-là, le bruit mesuré ne provient pas que du véhicule détecté, et peut même être majoritairement dû à l'autre véhicule.

L'invention offre donc une plus grande fiabilité de contrôle, en permettant de diminuer considérablement les détections erronées de niveau sonore excessif généré par un véhicule donné.

En pratique, la première et la deuxième caméras peuvent être distinctes, ou peuvent être constituées d'une seule et même caméra présentant les caractéristiques adaptées à la réalisation des deux fonctions correspondantes. Par « caméra », on entend une caméra vidéo, c'est-à-dire un appareil de prise de vues successives.

Selon une variante du procédé de l'invention, la phase de mesure est déclenchée automatiquement si l'objet mobile détecté est identifié comme étant un véhicule, sans condition sur le fait d'atteindre un plan de référence. On peut acquérir une donnée visuelle de la zone de mesure, au moyen de la deuxième caméra, à chaque instant t d'une série discrète d'instants successifs, et pas uniquement à un instant t_{R} tel que précédemment défini. De plus, on peut déterminer l'instant tmax auquel le niveau sonore maximal est atteint et, dans la phase de validation, utiliser la donnée visuelle acquise à l'instant t le plus proche de tmax. En pratique, l'instant tmax est sensiblement le même que l'instant t_{R}.

Selon un mode de réalisation, dans la phase de traitement des données acoustiques acquises, on détermine le niveau sonore minimal (Imin) au point de contrôle et, dans la phase de validation, on détermine si Imax - Imin est supérieur à une valeur prédéterminée, par exemple de l'ordre de 3 dB.

Ce niveau sonore minimal (Imin) correspond au bruit de fond ambiant, en l'absence du véhicule. Il peut être déterminé au début de la phase de mesure, c'est-à-dire quand le véhicule est au début de la zone de mesure. Il pourrait être calculé par d'autres méthodes, par exemple par la recherche de la valeur minimale avant et après le passage du véhicule dans la zone cible.

Sans la détermination du niveau sonore minimal (Imin) au point de contrôle, le procédé de l'invention permet de générer un diagramme temporel du niveau sonore lié au trafic routier dans un endroit, tel qu'une ville, sans que le niveau de bruit soit uniquement généré par le trafic routier.

En incluant la détermination du niveau sonore minimal (Imin) au point de contrôle, le procédé permet davantage de précision dans les informations obtenues. Il permet également d'éviter de considérer indûment un véhicule comme étant trop bruyant, notamment dans un endroit où il risque d'y avoir un bruit de fond généré par une autre source que le véhicule considéré (présence d'une terrasse, d'un chantier, d'un autre véhicule croisant le véhicule considéré, etc.). En pratique, l'écart entre (Imax) et (Imin) permet de déterminer si le niveau sonore maximal généré uniquement par le véhicule dépasse celui du bruit ambiant. Un cas où l'écart entre (Imax) et (Imin) est trop faible, par exemple inférieur à 3 dB, peut être écarté pour éviter une détection erronée de niveau sonore excessif généré uniquement par le véhicule.

Le procédé peut de plus comprendre la captation du niveau sonore global (Ig) au voisinage du point de contrôle, de préférence en continu. La captation peut être effectuée par un sonomètre, par exemple de classe 1. Cette captation a lieu en particulier pendant la phase de mesure. En outre, la phase de traitement est réalisée lorsque le niveau sonore global (Ig) capté au voisinage du point de contrôle pendant la durée de mesure est supérieur à un seuil prédéterminé.

Ainsi, le procédé prévoit l'acquisition des données visuelles et acoustiques quel que soit le niveau sonore global, c'est-à-dire même si ce niveau sonore est faible. En revanche, selon un mode de réalisation, le traitement et la validation des données ne sont effectués que si le niveau sonore global (Ig) capté dépasse un seuil prédéterminé, pendant la phase de mesure. Ceci évite de réaliser inutilement une phase de traitement, et ainsi de libérer des ressources et du temps de traitement.

Si l'objet mobile détecté est identifié comme étant un véhicule, et si le véhicule atteint un plan de référence, le procédé peut en outre comprendre une phase de spécification :
- pour lire une plaque d'immatriculation du véhicule, ce qui permet typiquement d'adresser une contravention au propriétaire du véhicule si le niveau sonore maximal dépasse la limite autorisée ;
- et/ou pour déterminer une catégorie à laquelle le véhicule appartient (par exemple dans un ensemble de catégories comportant les deux roues, les véhicules légers, les véhicules utilitaires, les poids lourds). Ceci trouve son intérêt dans le cas où les niveaux sonores maximaux autorisés sont différents selon la catégorie de véhicule.

Cette phase de spécification est réalisée dans une zone de spécification qui peut être située dans ou au moins partiellement en aval de la zone de mesure, ceci permettant la lecture de la plaque arrière de tout véhicule (un véhicule de type deux roues pouvant n'être équipé d'une plaque d'immatriculation qu'à l'arrière).

Cette phase de spécification peut être réalisée par une caméra, qui est généralement distincte de celle permettant d'acquérir les données visuelles, pour des questions d'orientation et de couverture de zones différentes de l'espace.

Selon un mode de réalisation, le procédé comprend une phase d'envoi à un site distant, de préférence via une communication sans fil, d'au moins une partie des données collectées et/ou calculées par le procédé. Les données concernées comprennent par exemple les informations de la plaque d'immatriculation du véhicule, ainsi que le niveau sonore maximal (Imax) au point de contrôle lié au déplacement du véhicule et le niveau sonore (Imin) au point de contrôle.

Dans la phase de traitement, le calcul de l'évolution du niveau sonore au point de contrôle peut comprendre le calcul d'une distribution de sources sonores équivalentes le long de la trajectoire du véhicule sur l'ensemble de la zone de mesure, puis la propagation uniquement des sources sonores équivalentes situées dans la zone cible. Ceci inclut en particulier les méthodes de beamforming (formation de voies) et de déconvolution.

Le procédé peut comprendre la correction du niveau sonore calculé, en fonction de la pression atmosphérique ambiante et/ou de la température mesurée(s) au voisinage du point de contrôle, puisque le niveau sonore est lié au niveau de pression acoustique et à la température.

Selon un deuxième aspect, l'invention concerne un système de contrôle du niveau sonore maximal, en un point de contrôle, lié au déplacement d'un véhicule sur une trajectoire dans une zone de mesure située à proximité du point de contrôle et face au système de contrôle. Le système de contrôle comprend un dispositif de traitement et, connectés au dispositif de traitement :
- une première caméra apte à détecter un objet mobile dans une zone d'identification située dans ou au moins partiellement en amont de la zone de mesure et à déterminer si l'objet mobile détecté est un véhicule ;
- un système de mesure commandé par le dispositif de traitement, comportant :
   -- une deuxième caméra apte à acquérir une donnée visuelle de la zone de mesure à au moins un instant t d'une durée de mesure ;
   -- une antenne acoustique comprenant une pluralité de capteurs de pression acoustique et apte à acquérir une donnée acoustique de la zone de mesure à des instants t' successifs de la durée de mesure ;

dans lequel le dispositif de traitement est configuré :
   -- pour activer automatiquement le système de mesure lorsqu'il reçoit de la première caméra l'information que l'objet mobile détecté est identifié comme étant un véhicule, et de la deuxième caméra que le véhicule a atteint un plan de référence qui est situé, sur la trajectoire, à proximité immédiate du point de contrôle ;
   -- pour traiter les données acoustiques acquises en :
      --- calculant une distribution de sources sonores équivalentes le long de la trajectoire du véhicule sur l'ensemble de la zone de mesure ;
      --- puis en propageant uniquement les sources sonores équivalentes situées dans une zone cible qui est incluse dans la zone de mesure, située en face de l'antenne acoustique et qui présente une dimension - le long de la trajectoire - de l'ordre de 1 à 3 fois la dimension du véhicule ;
par un traitement de beamforming et de déconvolution ;
de sorte à calculer l'évolution du niveau sonore au point de contrôle pendant la durée de mesure, et à déterminer le niveau sonore maximal (Imax) au point de contrôle sensiblement à un instant (t_{R}) correspondant à l'instant où le véhicule atteint le plan de référence ;
   -- et pour déterminer, sur la donnée visuelle acquise à l'instant (t_{R}) si, dans la zone cible, on a bien un et un seul véhicule présent.

L'antenne acoustique peut comprendre un réseau de N capteurs de pression acoustique, tels que des microphones ou des MEMS (microelectromechanical systems, ou en français : systèmes microélectromécaniques), où N est de préférence compris entre 8 et 150, voire entre 16 et 64 pour une bonne optimisation. Les capteurs de pression acoustique peuvent être agencés sensiblement sur un plan, et de préférence être disposés de façon sensiblement alignée.

Une telle antenne acoustique, avec une disposition appropriée de capteurs, assure, dans la direction de la zone cible, face à l'antenne, une bonne résolution (c'est-à-dire un pouvoir de séparation spatiale des sources sonores) et une bonne dynamique (c'est-à-dire la différence de niveau entre une source réelle et un artefact de traitement ou de bruit de mesure ) par traitement de beamforming.

Typiquement l'antenne acoustique peut présenter un plan caractéristique qui est orthogonal au plan contenant les N capteurs, et qui passe par l'isobarycentre des N capteurs. Le plan caractéristique inclut la direction du principal lobe de directivité de l'antenne acoustique. C'est par rapport à ce plan caractéristique qu'est définie la notion de « face à l'antenne ». La zone cible peut typiquement présenter une symétrie par rapport à ce plan caractéristique de l'antenne acoustique. Selon la forme de l'antenne et la disposition des N capteurs, le plan caractéristique peut être un plan de symétrie de l'antenne. Le plan de référence P_{R} peut être sensiblement confondu avec le plan caractéristique de l'antenne acoustique.

Le système peut en outre comprendre un dispositif de captage du niveau sonore global (Ig) au voisinage du point de contrôle, tel qu'un sonomètre.

Selon un mode de réalisation, le système comprend également un dispositif de spécification, tel qu'une caméra, configuré pour pouvoir, dans une zone de spécification située à proximité de la zone de mesure, de préférence située dans ou au moins partiellement en aval de la zone de mesure :
- lire une plaque d'immatriculation d'un véhicule ;
- et/ou déterminer une catégorie à laquelle un véhicule appartient - par exemple dans un ensemble de catégories comportant les deux roues, les véhicules légers, les véhicules utilitaires, les poids lourds.

Le système peut en outre comprendre :
- un système de communication configuré pour transmettre à un site distant, de préférence via une communication sans fil, des données collectées et/ou calculées par un ou plusieurs composants du système de contrôle ;
- et/ou une station météorologique comportant au moins un capteur de la pression atmosphérique ambiante et/ou de la température au voisinage du point de contrôle.

Selon un troisième aspect, l'invention concerne une installation comportant une voie de circulation, telle qu'une route ou une rue, sur laquelle un véhicule peut se déplacer selon une trajectoire, l'installation comportant un poteau sur lequel est fixé un système de contrôle tel que précédemment décrit. Le poteau est fixé au bord de la voie de circulation, ce qui est avantageux en termes de coûts d'installation et de maintenance (par rapport à au-dessus de la route par rapport à une disposition au-dessus de la voie de circulation). De plus, les capteurs de pression acoustique sont sensiblement alignés horizontalement et de préférence sensiblement parallèlement à la trajectoire du véhicule.

On décrit à présent, à titre d'exemple non limitatif, un mode de réalisation possible de l'invention, en référence aux figures annexées :
La figure 1 est une vue schématique d'un système de contrôle selon un mode de réalisation de l'invention ;
La figure 2 est une vue schématique en perspective d'une installation comportant le système de contrôle fixé en bord d'une voie de circulation ;
La figure 3 est un diagramme illustrant les phases d'un procédé de contrôle selon un mode de réalisation de l'invention ;
La figure 4 illustre une phase de détection du procédé ;
La figure 5 illustre une donnée visuelle acquise pendant une phase de mesure du procédé ;
La figure 6 illustre un ensemble de données acoustiques acquises pendant une phase de mesure du procédé, après traitement par beamforming et déconvolution ;
La figure 7 est une vue schématique de dessus de l'installation illustrant une phase de traitement du procédé ;
La figure 8 illustre l'utilisation de l'ensemble de données acoustiques de la figure 6 lors d'une phase de traitement du procédé ;
La figure 9 illustre un diagramme temporel d'évolution du niveau sonore obtenu par la phase de traitement du procédé.

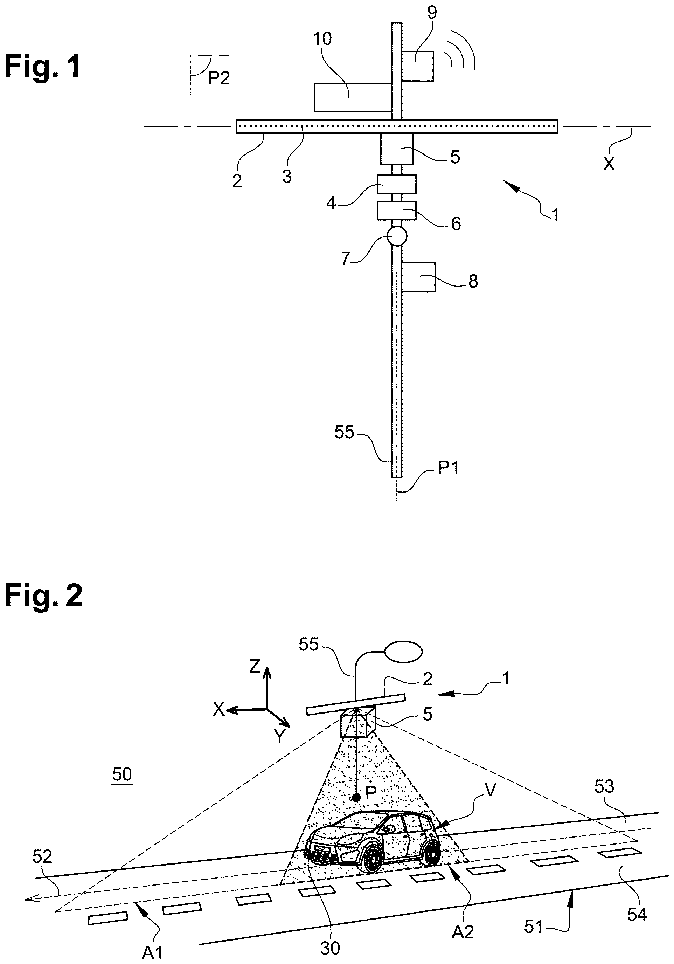

La figure 1 représente un système de contrôle 1 faisant partie d'une installation 50 illustrée sur la figure 2.

L'installation 50 comporte une voie de circulation 51 telle qu'une route ou une rue, sur laquelle un véhicule V peut se déplacer selon une trajectoire 52. La voie de circulation 51 peut comporter deux sens de circulation opposés 53, 54. La description qui suit sera faite dans le cas d'un véhicule routier, plus particulièrement une voiture. Toutefois, l'invention peut s'appliquer à tout véhicule, c'est-à-dire à tout moyen de transport, et en particulier un avion, notamment pour vérifier que la règlementation relative au bruit est respectée en bord de piste.

L'installation 50 comporte un poteau 55 fixé au bord de la voie de circulation 51. Il peut par exemple s'agir d'un lampadaire installé sur un trottoir bordant la voie de circulation 51, ou sur un bas-côté.

Sur le poteau 55 est fixé le système de contrôle 1. Celui-ci permet de contrôler le niveau sonore maximal (Imax), en un point de contrôle P, lié au déplacement du véhicule V sur la trajectoire 52 dans une zone de mesure A1 située à proximité du point de contrôle P et face au système de contrôle 1.

Le système de contrôle 1 comprend une antenne acoustique 2 permettant l'acquisition de données acoustiques et la localisation des sources de bruit correspondantes. L'antenne acoustique 2 comporte une pluralité de capteurs 3 de pression acoustique, par exemple entre 16 et 64. Il peut s'agir de microphones ou de MEMS.

Les capteurs de pression acoustique 3 peuvent être agencés sensiblement sur un plan, selon une distribution uniforme ou aléatoire. On peut ainsi avoir un agencement en spirale, par exemple.

Selon un mode de réalisation, les capteurs de pression acoustique 3 peuvent être agencés dans une bande étroite de part et d'autre d'une droite moyenne. On peut avoir ainsi un agencement en ligne droite, par exemple.

L'antenne acoustique 2 peut présenter un plan caractéristique P1 qui est orthogonal au plan contenant les capteurs de pression acoustique 3 et qui passe par l'isobarycentre de ces capteurs.

Selon une réalisation particulière illustrée sur la figure 1, les capteurs de pression acoustique 3 sont disposés de façon sensiblement alignée. Dans ce cas, le plan caractéristique P1 est un plan de symétrie de l'antenne acoustique 2, et il est orthogonal à la direction d'alignement des capteurs 3. L'antenne acoustique 2 peut par ailleurs présenter un plan moyen P2 contenant les capteurs 3.

D'autres dispositions envisageables de capteurs de pression acoustique 3 incluent : une disposition en croix de type « + », une série de lignes parallèles.

Le système de contrôle 1 est installé en un point fixe sur la trajectoire 52 du véhicule V, le poteau 55 étant sensiblement vertical et l'antenne acoustique 2 étant agencée de sorte que les capteurs 3 soient sensiblement alignés horizontalement et de préférence sensiblement parallèlement à la trajectoire 52 du véhicule V.

Le terme « parallèlement » s'entend comme parallèlement à la trajectoire 52, si celle-ci est rectiligne, ou comme parallèlement à un segment droit moyen de la trajectoire 52, localement en face de l'antenne acoustique 2.

Comme illustré sur la figure 2, on définit la direction verticale Z, la direction horizontale X comme la direction d'alignement des capteurs 3 sensiblement parallèlement à la trajectoire 52, au moins localement, et la direction horizontale Y orthogonale aux directions X et Z.

La notion de « face au système de contrôle 1 » ou « face à l'antenne acoustique 2 » est définie comme étant au voisinage du plan de symétrie P1, globalement en direction de la voie de circulation 51.

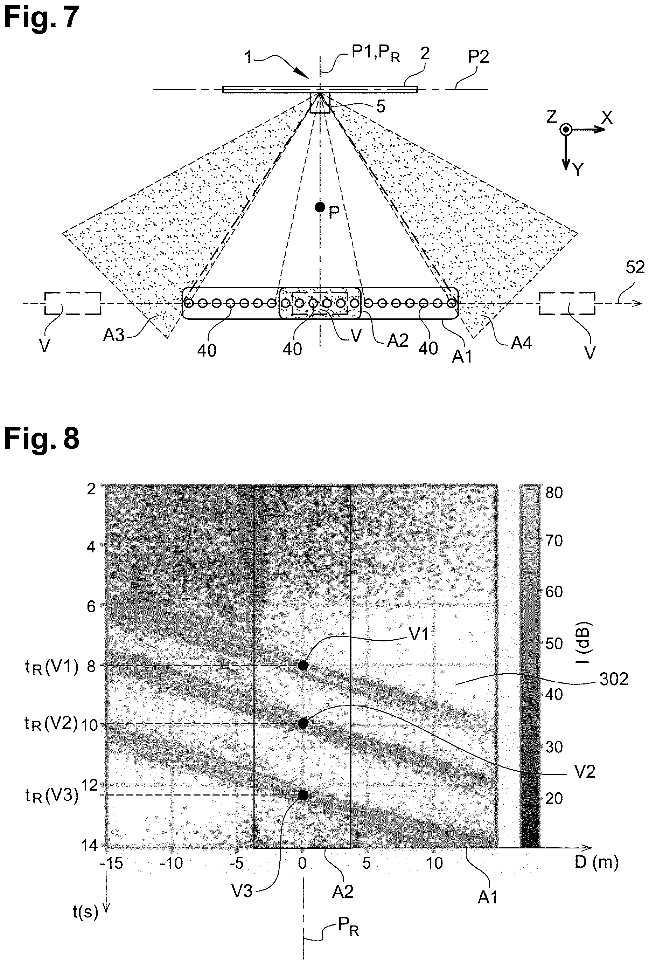

Comme on le voit plus particulièrement sur les figures 2 et 7, on définit le long de la trajectoire 52 du véhicule V :
- la zone de mesure A1, de préférence sensiblement symétrique par rapport au plan de symétrie P1, et dont la longueur, selon la direction X, peut être comprise entre 10 et 50 m, par exemple entre 10 et 20 m ;
- une zone cible A2 qui est située en face de l'antenne acoustique 2, incluse dans la zone de mesure A1, et de préférence sensiblement symétrique par rapport au plan de symétrie P1. La zone cible A2 présente une longueur, selon la direction X, qui est de l'ordre de 1 à 3 fois la longueur du véhicule V, par exemple de 1 à 2 fois. La longueur de la zone cible A2 peut être comprise entre 4 et 8 m, par exemple de l'ordre de 6 m. Dans un mode de réalisation, la zone cible A2 peut être formée d'un segment. Dans d'autres modes de réalisation, la zone cible peut être en deux dimensions ; dans ce cas, la longueur et la largeur de la zone cible peuvent être de l'ordre de 1 à 3 fois la longueur, respectivement la largeur, du véhicule V. Ainsi, exprimé de façon générale, la zone cible A2 présente une dimension de l'ordre de 1 à 3 fois la dimension correspondante du véhicule. On peut en outre envisager une zone cible en trois dimensions.

La distance entre l'antenne acoustique 2 et la zone cible A2 peut être comprise entre 7 et 10 m. Le système de contrôle 1 peut être agencé de sorte que le point de contrôle P soit situé dans le plan de symétrie P1, à 1,2 m du sol, et à une distance de la zone cible A2 (soit du centre de la voie) voisine de 7,5 m, ce qui correspond à un critère imposé par certaines réglementations.

Ainsi, l'antenne acoustique 2 est directive. L'antenne acoustique 2 et son agencement par rapport à la voie de circulation 51, comme précédemment décrit, permettent d'obtenir une bonne résolution (c'est-à-dire une bonne séparation des sources sonores) dans la direction d'alignement des capteurs 3, à savoir le long de la trajectoire 52.

On définit également un plan de référence P_{R} jouant un rôle dans le déclenchement de mesures effectuées au moyen du système de contrôle 1. Le plan de référence P_{R} est situé, sur la trajectoire 52, à proximité immédiate du point de contrôle P. Le plan de référence P_{R} peut être sensiblement confondu avec le plan caractéristique P1 de l'antenne acoustique 2.

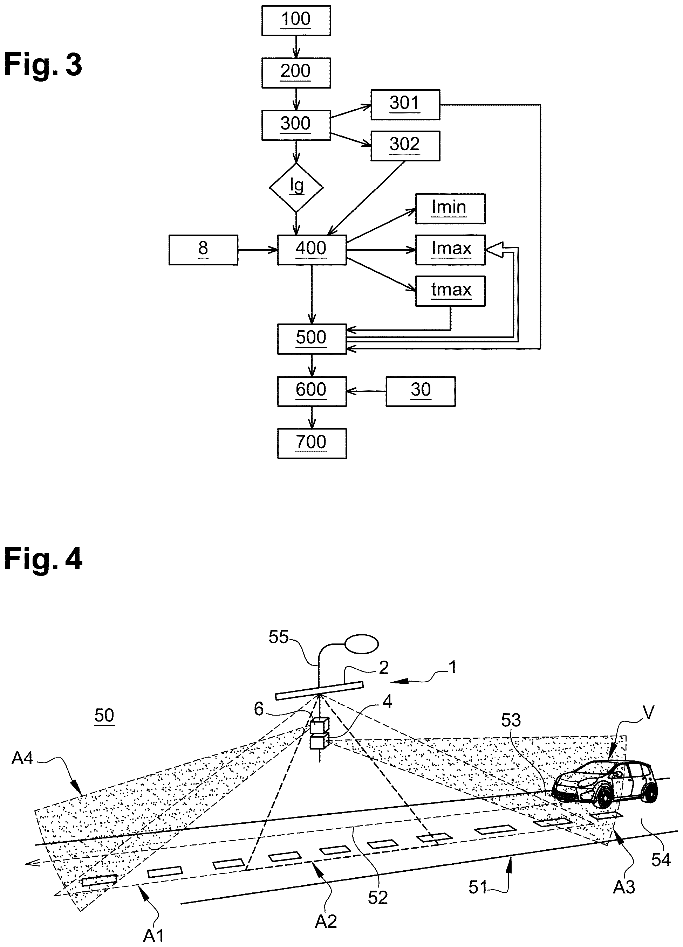

Par ailleurs, le système de contrôle 1 comprend une première caméra 4, qui est apte à détecter un objet mobile dans une zone d'identification A3 située dans ou au moins partiellement en amont de la zone de mesure A1 (voir figure 4), et à déterminer si l'objet mobile détecté est un véhicule.

Le système de contrôle 1 comprend également- une deuxième caméra 5, qui peut par exemple être une caméra grand angle. La deuxième caméra 5, apte à acquérir une donnée visuelle de la zone de mesure A1, et l'antenne acoustique 2, apte à acquérir une donnée acoustique de la zone de mesure A1, forment un système de mesure.

Le système de contrôle 1 peut en outre comprendre un dispositif de spécification 6, qui peut par exemple comporter une troisième caméra. Le dispositif de spécification 6 est configuré pour pouvoir, dans une zone de spécification A4 située à proximité de la zone de mesure A1 :
- lire une plaque d'immatriculation 30 d'un véhicule V ;
- et/ou déterminer une catégorie à laquelle un véhicule V appartient - par exemple dans un ensemble de catégories comportant les deux roues, les véhicules légers, les véhicules utilitaires, les poids lourds.

La zone de spécification A4 est de préférence située dans ou au moins partiellement en aval de la zone de mesure A1. Ainsi, le dispositif de spécification 6 peut lire la plaque d'immatriculation 30 de tout véhicule V, y compris les deux roues qui le plus souvent n'ont de plaque d'immatriculation qu'à l'arrière.

Il est à noter que, tant dans la description que dans les dessins, les fonctions différentes de prise de vue ont été attribuées à des caméras référencées de façon propre, à savoir la première caméra 4, la deuxième caméra 5 et la troisième caméra 6. Ces caméras peuvent être distinctes. Toutefois, selon une autre réalisation envisageable, une même caméra pourrait remplir plusieurs de ces fonctions, pour autant que ses caractéristiques et sa disposition dans l'installation 50 le permettent. C'est ainsi, par exemple, que la première caméra 4 et la deuxième caméra 5 pourraient constituer une seule et même caméra. Dans ce cas, l'angle de vue de cette unique caméra couvrirait la zone d'identification A3 et la zone de mesure A1.

Il est par ailleurs précisé que le système de contrôle 1 peut comporter plusieurs caméras d'un même type. Par exemple, le système de contrôle 1 peut comporter deux deuxièmes caméras 4, pour la détection d'un objet mobile dans chacun des deux sens de circulation 53, 54 de la voie de circulation 51. De façon analogue, le système de contrôle 1 peut comporter deux troisièmes caméras 6 (ou autre dispositif de spécification 6) pour permettre la lecture de la plaque d'immatriculation 30 arrière de tout véhicule V, qu'il circule dans l'un ou l'autre des deux sens de circulation 53, 54.

Enfin, on précise que, hormis sur la figure 1, toutes les caméras ne sont pas représentées sur chacune des figures.

Le système de contrôle 1 peut en outre comprendre un dispositif de captage du niveau sonore global (Ig) au voisinage du point de contrôle, tel qu'un sonomètre 7. Il peut s'agir d'un microphone de classe 1 permettant d'obtenir une mesure normative.

Le système de contrôle 1 peut comprendre une station météorologique 8 comportant au moins un capteur de la pression atmosphérique ambiante et un capteur de température ambiante au voisinage du point de contrôle P. Ainsi, il est possible d'apporter une correction sur le niveau de pression acoustique mesuré, en fonction des conditions ambiantes, lorsqu'il s'agira de déterminer le niveau sonore au point de contrôle P.

Le système de contrôle 1 peut en outre comprendre un système de communication 9 configuré pour transmettre à un site distant, de préférence via une communication sans fil, des données collectées et/ou calculées par un ou plusieurs composants du système de contrôle 1.

De plus, le système de contrôle 1 comprend un dispositif de traitement 10 qui est connecté aux différents composants du système de contrôle 1 (à savoir : la première caméra, la deuxième caméra, l'antenne acoustique et, optionnellement, le sonomètre, la station météorologique, le système de communication, la troisième caméra), de façon à permettre la réception et la transmission de données (acoustiques, vidéo, éventuellement météorologiques) et la commande de composants du système de contrôle 1.

Ainsi, bien que sur la figure 1 tous les composants aient été représentés comme étant montés sur le poteau 55, certains composants pourraient être situés à distance du poteau 55 pour autant qu'il existe une connexion permettant la communication entre eux, généralement via le dispositif de traitement 10. A titre d'exemple, la première caméra 4 n'est pas nécessairement fixée sur le poteau 55, ou n'est pas nécessairement située à proximité immédiate de l'antenne acoustique 2.

Le dispositif de traitement 10 permet également de réaliser le traitement des données acquises, pour que puisse être déterminé le niveau sonore maximal (Imax), au point de contrôle P, lié au déplacement du véhicule V, voire émis par le véhicule V.

Le dispositif de traitement 10 peut comporter au moins un ordinateur. Il est à noter que le dispositif de traitement 10 est représenté schématiquement sur la figure 1 comme un unique bloc. Toutefois, il pourrait comporter plusieurs parties appartenant à différents composants du système de contrôle 1 et communiquant entre elles.

Selon une réalisation possible, le dispositif de traitement 10 fonctionne de manière autonome et peut s'interfacer à un réseau informatique permettant l'échange de données par les protocoles de communication standards.

On décrit à présent le procédé pour contrôler le niveau sonore maximal (Imax) au point de contrôle P, en référence aux figures 3 à 9.

Le procédé comprend une phase de détection 100 lors de laquelle, au moyen de la première caméra 4, on détecte un objet mobile dans la zone d'identification A3 et on détermine si l'objet mobile détecté est un véhicule V (figure 4).

Si l'objet mobile détecté est identifié comme étant un véhicule V, et si le véhicule V atteint le plan de référence P_{R}, c'est-à-dire s'il passe face à l'antenne acoustique 2, ce qui peut être détecté par la deuxième caméra 5, s'ensuit une phase de déclenchement 200, dans laquelle on déclenche automatiquement une phase de mesure 300. De façon concrète, le système de mesure (à savoir la deuxième caméra 5 et l'antenne acoustique 2) est commandé par le dispositif de traitement 10. En d'autres termes, le dispositif de traitement 10 est configuré pour activer automatiquement le système de mesure lorsqu'il reçoit de la première caméra 4 l'information que l'objet mobile détecté est identifié comme étant un véhicule V et de la deuxième caméra 5 que le véhicule V a atteint la plan de référence P_{R}.

La phase de mesure 300 est réalisée pendant une durée de mesure qui couvre sensiblement la période où le véhicule V se déplace dans la zone de mesure A1.

La durée de mesure est par exemple comprise entre 2 et 6 secondes. Plus généralement, la durée de mesure doit être suffisante pour que le véhicule V ait parcouru la totalité de la zone de mesure A1 à une vitesse minimale prédéterminée, qui dépend du lieu d'implantation du système de contrôle 1. Par exemple, lorsque la voie de circulation 51 est une route ou une rue d'une ville où la vitesse est limitée à 50 km/h, on peut choisir 30 km/h comme vitesse minimale prédéterminée ce qui, pour une zone de mesure A1 ayant une longueur de 20 m, donne une durée de mesure d'environ 2,4 s.

Lors de la phase de mesure 300, on procède à l'acquisition de données visuelles et acoustiques. Plus spécifiquement :
- on acquiert une donnée visuelle 301 de la zone de mesure A1 au moyen de la deuxième caméra 5, au moins à un instant t_{R} correspondant sensiblement à l'instant où le véhicule V atteint le plan de référence P_{R}. Ceci permet d'avoir une image bien centrée du véhicule V, lorsqu'il est en face de l'antenne acoustique 2. Cette donnée visuelle 301 peut correspondre à une pise de vue unique, à l'instant t_{R}, ou à l'extraction d'une donnée visuelle dans un flux vidéo, à chaque instant t d'une série discrète d'instants successifs ;
- et, à chaque instant t' d'une série discrète d'instants successifs, on acquiert une donnée acoustique 302 de la zone de mesure A1 au moyen de l'antenne acoustique 2.

L'acquisition des données visuelles 301 et/ou des données acoustiques 302 peut être effectuée à des intervalles de temps compris entre 20 ms et 40 ms.

Dans le cas où l'on a recours à un flux vidéo, il est possible d'acquérir les données visuelles 301 à des intervalles réguliers Δt1, et les données acoustiques 302 à des intervalles réguliers Δt2. On peut avoir Δt1 ≠ Δt2, ce qui signifie que les instants t et t' ne coïncident pas nécessairement mais sont synchronisés sur une même horloge. En pratique, on acquiert davantage de données acoustiques 302 que de données visuelles 301 pendant la durée de mesure.

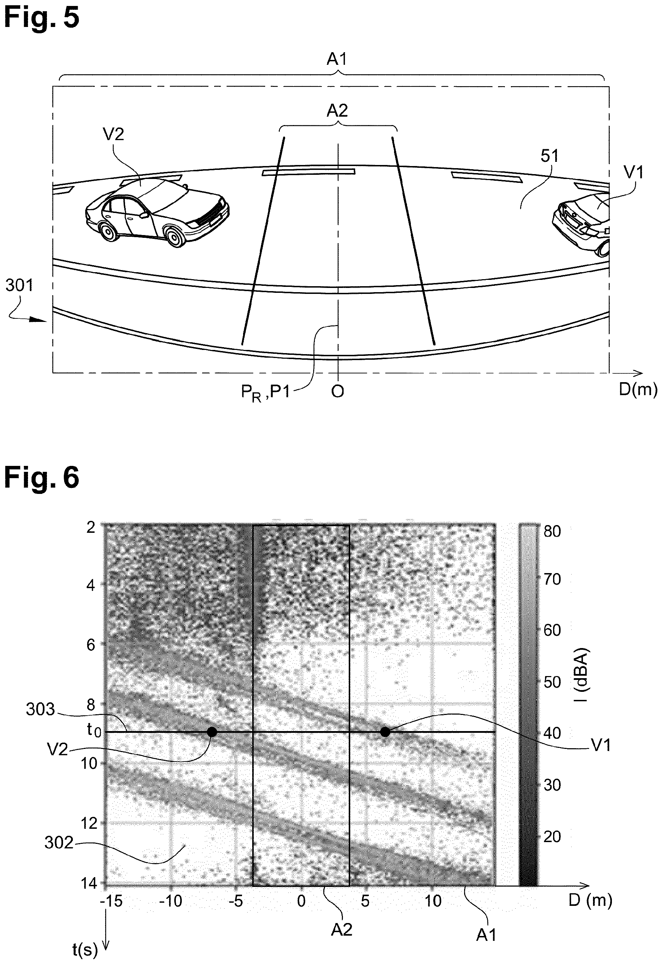

La figure 5 montre une donnée visuelle 301, c'est-à-dire une image, qui peut être acquise pendant la phase de mesure 300 par la deuxième caméra 5. La donnée visuelle 301 couvre la zone de mesure A1, et la zone cible A2 est représentée entre les deux traits pleins. On constate sur cette donnée visuelle 301 qu'un premier véhicule V1 est en train de quitter la zone de mesure A1 tandis qu'un deuxième véhicule V2 vient d'entrer dans la zone de mesure A1 et s'apprête à entrer dans la zone cible A2.

La figure 6 est un diagramme qui illustre l'ensemble des données acoustiques 302 acquises pendant une période de temps donnée, après traitement.

Il est précisé que des données acoustiques 302 mesurées antérieurement à la phase de déclenchement sont disponibles grâce à une mémoire tampon (buffer) qui permet de stocker temporairement des données sur une courte période précédant le déclenchement, par exemple environ 1,5 s.

Le diagramme de la figure 6 a pour abscisse la distance D (en mètres), le long de la direction X, par rapport au plan de symétrie P1 et en ordonnée le temps (en secondes) de la période de temps concernée. Chaque donnée acoustique 302 acquise et traitée par formation de voie et déconvolution est représentée par une ligne de points horizontale qui représente donc une distribution possible de localisation de la source de bruit ou un point source équivalent dans l'espace (abscisse) et un moment d'émission (ordonnée). Chaque point possède de plus une couleur (ou un niveau de gris) plus ou moins important selon le niveau sonore correspondant, en référence à une échelle de niveaux sonores (I) (en dBA) figurant à droite du diagramme.

L'axe des ordonnées de la figure 6 correspond à la zone de mesure A1 (ici entre -15 m et + 15m, soit une zone de mesure A1 de 30 m). En outre, la zone cible A2 est matérialisée sur la figure 6 par un rectangle (ici entre environ -3m et +3m, soit une zone cible A2 de 6 m environ).

Dans la période couverte par le diagramme de la figure 6, on constate le passage de trois véhicules successifs, visibles par trois lignes obliques parallèles entre elles et qui correspondent à des niveaux sonores (I) plus importants que le reste du temps. La ligne 303 représente l'instant t0 où a été acquise la donnée visuelle 301 de la figure 5. Sur la ligne 303 on a représenté :
- sur la première ligne oblique (dans l'ordre chronologique), un point correspondant au premier véhicule V1, qui a quitté la zone cible A2 et est en train de quitter la zone de mesure A1 ;
- et sur la deuxième ligne oblique, un point correspondant au deuxième véhicule V2, qui vient d'entrer dans la zone de mesure A1 et s'apprête à entrer dans la zone cible A2.

La troisième ligne oblique reflète le futur passage d'un troisième véhicule, postérieurement à t0, ce véhicule ne pouvant donc pas être visible sur la donnée visuelle 301 de la figure 5.

Le procédé comporte ensuite une phase de traitement 400 des données acoustiques 302 acquises.

De préférence, cette phase de traitement 400 n'est réalisée que si le niveau sonore global (Ig) au voisinage du point de contrôle P, capté par le sonomètre 7 (ou autre dispositif de captage) pendant la durée de mesure est supérieur à un seuil prédéterminé, c'est-à-dire au seuil maximal de bruit autorisé. Le niveau sonore global (Ig) peut être capté en continu.

Le sonomètre 7, s'il fournit une mesure normative, ne permet pas en revanche de distinguer la provenance du bruit, c'est-à-dire typiquement si le bruit excessif est bien généré par un véhicule, et si oui par quel véhicule lorsqu'il y en a plusieurs qui se suivent. Ces fonctionnalités sont assurées par le système de contrôle 1, notamment lors de phase de traitement 400. Toutefois, le traitement des données requiert du temps et des ressources de calcul. Le sonomètre 7, en fournissant la valeur du niveau sonore global (Ig), permet de ne réaliser la phase de traitement 400 que lorsque cela paraît nécessaire, à savoir quand le niveau sonore globale (Ig) dépasse un seuil minimal, et non à chaque passage de véhicule V, y compris lorsque le véhicule est peu bruyant.

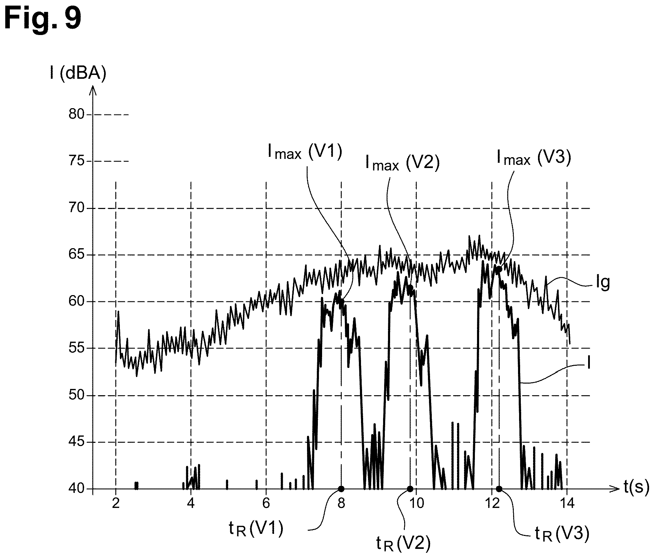

Dans la phase de traitement 400, on calcule l'évolution du niveau sonore (I) au point de contrôle P pendant la durée de mesure. On obtent ainsi un diagramme temporel, comme illustré sur la figure 9, où l'on voit l'évolution du niveau sonore au point de contrôle P (axe des ordonnées) en fonction du temps (axe des abscisses).

Selon un mode de réalisation, pour calculer l'évolution du niveau sonore (I) au point de contrôle P, on calcule une distribution de sources sonores équivalentes 40 le long de la trajectoire 52 du véhicule V, sur l'ensemble de la zone de mesure A1, comme cela est représenté schématiquement sur la figure 7. En d'autres termes, on discrétise l'espace en points de calcul, et on modélise le champ acoustique par une distribution de sources sonores équivalentes 40. A titre d'exemple, on peut réaliser une modélisation avec un nombre de sources équivalentes de l'ordre de 400.

Dans le cas où l'on a recours à un flux vidéo, de préférence, le procédé de contrôle est tel que le ou les intervalles temporels Δt1 pour l'acquisition des données visuelles 301 lors de la phase de mesure 300 sont suffisamment courts pour que, pendant un tel intervalle temporel, le véhicule V ne se soit pas déplacé d'une distance supérieure à la distance entre deux sources équivalentes 40.

Puis, on réalise la propagation uniquement des sources sonores équivalentes 40 situées dans la zone cible A2.

De façon concrète, le traitement des données acoustiques 302 acquises peut être effectué par le dispositif de traitement 10.

Le traitement des données acoustiques 302 peut typiquement consister à traiter le signal fourni par chacun des capteurs 3 de pression acoustique de l'antenne acoustique 2. Ceci permet de redistribuer l'énergie mesurée en des points sources équivalents 40 le long de la zone de mesure A1. Le procédé de contrôle et le système de contrôle 1 permettent ainsi de localiser et d'isoler les sources de bruit ; en particulier, ils permettent de séparer - en termes d'émissions sonores - deux véhicules qui se suivent, lorsque l'écart entre ces véhicules est suffisant au regard de la résolution de l'antenne. Concrètement, le procédé et le système selon l'invention permettent de séparer deux véhicules qui se suivent avec au moins 5 mètres d'écart, ce qui est suffisant en pratique pour des véhicules circulant à une vitesse minimale de 30 km/h.

Ceci est mis en évidence sur la figure 9 qui montre :
- une courbe du niveau sonore (I) lié au déplacement de trois véhicules V successifs et calculé pendant la phase de traitement 400 ;
- et une courbe de l'évolution du niveau sonore global (Ig) capté par le sonomètre 7.

Contrairement au niveau sonore global (Ig) capté, qui suit sensiblement une évolution d'abord ascendante, jusqu'à un maximum, puis descendante, le niveau sonore (I) calculé comprend trois pics successifs et distincts correspondant chacun au passage de l'un des véhicules V.

La phase de traitement 400 inclut également la détermination du niveau sonore maximal (Imax) au point de contrôle P. En pratique, ce niveau sonore maximal (Imax) est atteint lorsque le véhicule V passe devant l'antenne acoustique 2, c'est-à-dire sensiblement à l'instant t_{R} correspondant sensiblement à l'instant où le véhicule V atteint le plan de référence P_{R}.

La figure 9 montre ainsi le niveau sonore maximal Imax(V1), Imax(V2), Imax(V3) atteint respectivement à l'instant t_{R}(V1), t_{R}(V2), t_{R}(V3), et lié au passage du véhicule V1, V2, V3, respectivement.

La figure 8, identique à la figure 6, montre schématiquement les véhicules V1, V2 et V3 lorsqu'ils sont dans la zone cible A2, respectivement aux instants t_{R}(V1), t_{R}(V2), t_{R}(V3).

Selon un mode de réalisation, dans la phase de traitement 400 des données acoustiques 302 acquises, on peut également déterminer le niveau sonore minimal (Imin) au point de contrôle P. (Imin) peut être déterminé à partir de la courbe de l'évolution du niveau sonore (I) au point de contrôle P, obtenue avec la méthode des sources sonores équivalentes 40 comme expliqué précédemment. (Imin) peut correspondre à une partie en plateau de la courbe de la figure 9, avant et après la portion en cloche correspondant au passage d'un véhicule V.

Imin représente le bruit de fond ambiant, dans la zone cible A2, en l'absence du véhicule.

Lors de la phase de traitement 400 peut être utilisée la valeur de la pression atmosphérique ambiante et de la température ambiante au voisinage du point de contrôle P, fournie par le capteur de pression et le capteur de température de la station météorologique 8. Ces valeurs permettent de corriger le niveau de pression acoustique mesuré, en fonction des conditions ambiantes, et ainsi de déterminer de façon plus juste le volume sonore (I).

Le procédé comprend ensuite une phase de validation 500 permettant de confirmer que le niveau sonore maximal (Imax) calculé lors de la phase de traitement est bien lié au véhicule V considéré et qu'il dépasse le bruit de fond de plusieurs dB (par exemple, Imax-Imin > 3 dB).

Au cours de la phase de validation 500, on détermine, sur la donnée visuelle 301 acquise à l'instant t_{R} si, dans la zone cible A2, on a bien un et un seul véhicule présent.

En effet, l'absence de véhicule sur cette donnée visuelle 301 indiquerait que le niveau sonore maximal (Imax) provient d'une source de bruit autre que le véhicule concerné, par exemple un bruit ponctuel au loin à l'instant (t_{R}). Par ailleurs, la présence de deux véhicules sur cette donnée visuelle 301 - typiquement le véhicule concerné par le procédé de contrôle 1 et un véhicule circulant dans l'autre sens et le croisant dans la zone cible A2 à (t_{R}) - ne permettrait pas d'affirmer avec certitude que le niveau sonore maximal (Imax) est dû au véhicule concerné et non également à l'autre véhicule.

Le procédé peut en outre comprendre une phase de spécification 600, si, lors de la phase de détection 100, l'objet mobile détecté est identifié comme étant un véhicule V. Il est précisé que, bien que la phase de spécification 600 soit indiquée sur la figure 3 comme successive à la phase de validation 500, ceci ne doit pas être considéré comme limitatif. La phase de spécification 600 peut typiquement être réalisée par la troisième caméra, ou tout autre dispositif de spécification 6, et permet :
- de lire la plaque d'immatriculation 30 du véhicule V ;
- et/ou de déterminer une catégorie à laquelle le véhicule V appartient.

Par ailleurs, le procédé peut comprendre une phase d'envoi 700 à un site distant d'au moins une partie des données collectées et/ou calculées par le procédé. Cet envoi peut typiquement être effectué via une communication sans fil, par le système de communication 9. Les données concernées peuvent être le niveau sonore maximal (Imax), ce qui peut servir à établir une carte de bruit dans une ville, par exemple. En variante, les données transmises peuvent être le niveau sonore maximal (Imax) et optionnellement le niveau sonore (Imin) au point de contrôle, ainsi que les informations de la plaque d'immatriculation 30 du véhicule V, dans le but de faire respecter une règlementation en termes de niveau de bruit et de verbaliser les infractions.

Grâce au procédé et au système de contrôle selon l'invention, il est possible de déterminer si un véhicule V génère un niveau sonore excessif, en éliminant sensiblement tous les faux positifs, ce qui garantit la justesse des mesures et des verbalisations éventuelles.

Bien que l'installation 1 illustrée sur les figures 2 et 4 montrent un unique système de contrôle 1, il est possible de placer un système de contrôle 1 de chaque côté de la voie de circulation 51.

Il va de soi que l'invention n'est pas limitée au mode de réalisation décrit ci-dessus à titre d'exemple mais qu'elle s'étend à toutes les variantes entrant dans le cadre des revendications annexées.

## Revendications

1. Procédé pour contrôler le niveau sonore maximal (Imax), en un point de contrôle (P), lié au déplacement d'un véhicule (V) sur une trajectoire (52) dans une zone de mesure (A1) située à proximité du point de contrôle (P), comprenant les phases suivantes :
- une phase de détection (100) dans laquelle, au moyen d'une première caméra (4), on détecte un objet mobile dans une zone d'identification (A3) située dans ou au moins partiellement en amont de la zone de mesure (A1) et on détermine si l'objet mobile détecté est un véhicule ;
- une phase de déclenchement (200) dans laquelle, si l'objet mobile détecté est identifié comme étant un véhicule, et si le véhicule (V) atteint un plan de référence (P_{R}) qui est situé, sur la trajectoire (52), à proximité immédiate du point de contrôle (P), on déclenche automatiquement une phase de mesure (300) ;
- une phase de mesure (300), pendant une durée de mesure couvrant sensiblement la période où le véhicule (V) se déplace dans la zone de mesure (A1), dans laquelle :
-- à au moins un instant (t_{R}) correspondant sensiblement à l'instant où le véhicule (V) atteint le plan de référence (P_{R}), on acquiert une donnée visuelle (301) de la zone de mesure (A1) au moyen d'une deuxième caméra (5) ;
-- et, à chaque instant t' d'une série discrète d'instants successifs, on acquiert une donnée acoustique (302) de la zone de mesure (A1) au moyen d'une antenne acoustique (2) comprenant une pluralité de capteurs (3) de pression acoustique ;
- une phase de traitement (400) des données acoustiques (302) acquises, dans laquelle :
-- on calcule l'évolution du niveau sonore (I) au point de contrôle (P) pendant la durée de mesure, ce calcul comprenant :
--- le calcul d'une distribution de sources sonores équivalentes (40) le long de la trajectoire (52) du véhicule (V) sur l'ensemble de la zone de mesure (A1) ;
--- puis la propagation au point de contrôle (P) uniquement des sources sonores équivalentes (40) situées dans une zone cible (A2) qui est incluse dans la zone de mesure (A1), située en face de l'antenne acoustique (2) et qui présente une dimension - le long de la trajectoire (52) - de l'ordre de 1 à 3 fois la dimension du véhicule (V) ;
par un traitement de beamforming et de déconvolution ;
-- et on détermine le niveau sonore maximal (Imax) au point de contrôle (P), sensiblement à l'instant (t_{R}) ;
- une phase de validation (500) dans laquelle on détermine, sur la donnée visuelle (301) acquise à l'instant (t_{R}) si, dans la zone cible (A2), on a bien un et un seul véhicule (V) présent.

2. Procédé selon la revendication 1, **caractérisé en ce que**, dans la phase de traitement (400) des données acoustiques (302) acquises, on détermine le niveau sonore minimal (Imin) au point de contrôle (P) et **en ce que**, dans la phase de validation (500), on détermine si Imax - Imin est supérieur à une valeur prédéterminée, par exemple de l'ordre de 3 dB.

3. Procédé selon la revendication 1 ou 2, **caractérisé en ce qu'**il comprend la captation du niveau sonore global (Ig) au voisinage du point de contrôle (P), de préférence en continu, de préférence par un sonomètre (7), et **en ce que** la phase de traitement (400) est réalisée lorsque le niveau sonore global (Ig) capté au voisinage du point de contrôle (P) pendant la durée de mesure est supérieur à un seuil prédéterminé.

4. Procédé selon l'une des revendications 1 à 3, **caractérisé en ce que**, si l'objet mobile détecté est identifié comme étant un véhicule, le procédé comprend en outre une phase de spécification (600), pour lire une plaque d'immatriculation (30) du véhicule (V), et/ou pour déterminer une catégorie à laquelle le véhicule (V) appartient - par exemple dans un ensemble de catégories comportant les deux roues, les véhicules légers, les véhicules utilitaires, les poids lourds.

5. Procédé selon l'une des revendications 1 à 4, **caractérisé en ce qu'**il comprend une phase d'envoi (700) à un site distant, de préférence via une communication sans fil, d'au moins une partie des données collectées et/ou calculées par le procédé.

6. Procédé selon l'une des revendications 1 à 5, **caractérisé en ce qu'**il comprend la correction du niveau sonore (I) calculé, en fonction de la pression atmosphérique ambiante et/ou de la température mesurée(s) au voisinage du point de contrôle (P).

7. Système de contrôle (1) du niveau sonore maximal (Imax), en un point de contrôle (P), lié au déplacement d'un véhicule (V) sur une trajectoire (52) dans une zone de mesure (A1) située à proximité du point de contrôle (P) et face au système de contrôle, comprenant un dispositif de traitement (10) et, connectés au dispositif de traitement (10) :
- une première caméra (4) apte à détecter un objet mobile dans une zone d'identification (A3) située dans ou au moins partiellement en amont de la zone de mesure (A1) et à déterminer si l'objet mobile détecté est un véhicule ;
- un système de mesure commandé par le dispositif de traitement (10), comportant :
-- une deuxième caméra (5) apte à acquérir une donnée visuelle (301) de la zone de mesure (A1) à au moins un instant t d'une durée de mesure ;
-- une antenne acoustique (2) comprenant une pluralité de capteurs (3) de pression acoustique et apte à acquérir une donnée acoustique (302) de la zone de mesure (A1) à des instants t' successifs de la durée de mesure ;
dans lequel le dispositif de traitement (10) est configuré :
-- pour activer automatiquement le système de mesure lorsqu'il reçoit de la première caméra (4) l'information que l'objet mobile détecté est identifié comme étant un véhicule, et de la deuxième caméra (5) que le véhicule (V) a atteint un plan de référence (P_{R}) qui est situé, sur la trajectoire (52), à proximité immédiate du point de contrôle (P) ;
-- pour traiter les données acoustiques (302) acquises en :
--- calculant une distribution de sources sonores équivalentes (40) le long de la trajectoire (52) du véhicule (V) sur l'ensemble de la zone de mesure (A1) ;
--- puis en propageant au point de contrôle (P) uniquement les sources sonores équivalentes (40) situées dans une zone cible (A2) qui est incluse dans la zone de mesure (A1), située en face de l'antenne acoustique (2) et qui présente une dimension - le long de la trajectoire (52) - de l'ordre de 1 à 3 fois la dimension du véhicule (V) ;
par un traitement de beamforming et de déconvolution ;
de sorte à calculer l'évolution du niveau sonore (I) au point de contrôle (P) pendant la durée de mesure, et à déterminer le niveau sonore maximal (Imax) au point de contrôle (P) sensiblement à un instant (t_{R}) correspondant sensiblement à l'instant où le véhicule (V) atteint le plan de référence (P_{R}) ;
-- et pour déterminer, sur la donnée visuelle (301) acquise à l'instant (t_{R}) si, dans la zone cible (A2), on a bien un et un seul véhicule présent.

8. Système selon la revendication 7, **caractérisé en ce que** l'antenne acoustique (2) comprend un réseau de N capteurs (3) de pression acoustique, tels que des microphones ou des MEMS, où N est de préférence compris entre 8 et 150, voire entre 16 et 64, les capteurs (3) de pression acoustique étant agencés sensiblement sur un plan voire disposés de façon sensiblement alignée.

9. Système selon la revendication 7 ou 8, **caractérisé en ce qu'**il comprend en outre un dispositif de captage (7) du niveau sonore global (Ig) au voisinage du point de contrôle (P), tel qu'un sonomètre.

10. Système selon l'une des revendications 7 à 9, **caractérisé en ce qu'**il comprend en outre un dispositif de spécification (6), tel qu'une caméra, configuré pour pouvoir, dans une zone de spécification (A4) située à proximité de la zone de mesure (A1), de préférence située dans ou au moins partiellement en aval de la zone de mesure (A1) :
- lire une plaque d'immatriculation (30) d'un véhicule (V) ;
- et/ou déterminer une catégorie à laquelle un véhicule (V) appartient - par exemple dans un ensemble de catégories comportant les deux roues, les véhicules légers, les véhicules utilitaires, les poids lourds.

11. Système selon l'une des revendications 7 à 10, **caractérisé en ce qu'**il comprend en outre un système de communication (9) configuré pour transmettre à un site distant, de préférence via une communication sans fil, des données collectées et/ou calculées par un ou plusieurs composants du système de contrôle (1).

12. Système selon l'une des revendications 7 à 11, **caractérisé en ce qu'**il comprend une station météorologique (8) comportant au moins un capteur de la pression atmosphérique ambiante et/ou de la température au voisinage du point de contrôle (P).

13. Installation (50) comportant une voie de circulation (51), telle qu'une route ou une rue, sur laquelle un véhicule (V) peut se déplacer selon une trajectoire (52), l'installation (50) comportant un poteau (55) sur lequel est fixé un système de contrôle (1) selon l'une des revendications 7 à 12, le poteau (55) étant fixé au bord de la voie de circulation (51), et les capteurs (3) de pression acoustique étant sensiblement alignés horizontalement et de préférence sensiblement parallèlement à la trajectoire (52) du véhicule (V).

14. Installation selon la revendications 13, **caractérisée en ce que** la longueur de la zone de mesure (A1) est comprise entre 10 et 50 m, et/ou la longueur de la zone cible (A2) est comprise entre 4 et 8 m, et/ou la distance entre l'antenne acoustique (2) et la zone cible est comprise entre 7 et 10 m.

## Patentansprüche

1. Verfahren zur Kontrolle des maximalen Geräuschpegels (Imax) an einem Kontrollpunkt (P), der mit der Bewegung eines Fahrzeugs (V) auf einer Trajektorie (52) in einem Messbereich (A1) verknüpft ist, der sich in der Nähe des Kontrollpunkts (P) befindet, die folgenden Phasen umfassend:
- eine Erfassungsphase (100), wobei, mittels einer ersten Kamera (4), ein bewegliches Objekt in einem Identifikationsbereich (A3) erfasst wird, der sich in oder mindestens teilweise vor dem Messbereich (A1) befindet, und ermittelt wird, ob das erfasste bewegliche Objekt ein Fahrzeug ist;
- eine Auslösephase (200), wobei, wenn das erfasste bewegliche Objekt als Fahrzeug identifiziert wird und wenn das Fahrzeug (V) eine Referenzebene (P_{R}) erreicht, die sich, auf der Trajektorie (52), in unmittelbarer Nähe des Kontrollpunkts (P) befindet, automatisch eine Messphase (300) ausgelöst wird;
- eine Messphase (300), während einer Dauer der Messung, die im Wesentlichen den Zeitraum abdeckt, in dem sich das Fahrzeug (V) im Messbereich (A1) bewegt, wobei:
-- zu mindestens einem Zeitpunkt (t_{R}), der im Wesentlichen dem Zeitpunkt entspricht, zu dem das Fahrzeug (V) die Referenzebene (P_{R}) erreicht, ein visuelles Datenmaterial (301) des Messbereichs (A1) mittels einer zweiten Kamera (5) erlangt werden;
-- und, zu jedem Zeitpunkt t' einer diskreten Reihe aufeinanderfolgender Zeitpunkte, ein akustisches Datenmaterial (302) des Messbereichs (A1) mittels einer akustischen Antenne (2) erlangt wird, die eine Vielzahl von Schalldrucksensoren (3) umfasst;
- eine Bearbeitungsphase (400) der erlangten akustischen Datenmaterialien (302), wobei:
-- die Entwicklung des Geräuschpegels (I) am Kontrollpunkt (P) während der Dauer der Messung berechnet wird, wobei diese Berechnung umfasst:
-- die Berechnung einer Verteilung äquivalenter Geräuschquellen (40) entlang der Trajektorie (52) des Fahrzeugs (V) über den gesamten Messbereich (A1);
-- anschließend die Ausbreitung am Kontrollpunkt (P) nur der äquivalenten Geräuschquellen (40), die sich in einem Zielbereich (A2) befinden, der im Messbereich (A1) eingeschlossen ist, der sich gegenüber der akustischen Antenne (2) befindet, und der eine Abmessung aufweist - entlang der Trajektorie (52) - die in der Größenordnung des 1- bis 3-fachen der Abmessung des Fahrzeugs (V) liegt;
durch eine Bearbeitung des Beamforming und der Dekonvolution;
-- und der maximale Geräuschpegel (Imax) am Kontrollpunkt (P) ermittelt wird, im Wesentlichen zum Zeitpunkt (t_{R});
- eine Validierungsphase (500), wobei anhand des zum Zeitpunkt (t_{R}) erlangten visuellen Datenmaterials (301) ermittelt wird, ob im Zielbereich (A2) ein und tatsächlich nur ein Fahrzeug (V) vorhanden ist.

2. Verfahren nach Anspruch 1, **dadurch gekennzeichnet, dass**, in der Bearbeitungsphase (400) der erlangten akustischen Datenmaterialien (302), der minimale Geräuschpegel (Imin) am Kontrollpunkt (P) ermittelt wird, und in der Validierungsphase (500) ermittelt wird, ob Imax - Imin größer ist als ein vorbestimmter Wert, beispielsweise in der Größenordnung von 3 dB.

3. Verfahren nach Anspruch 1 oder 2, **dadurch gekennzeichnet, dass** es den Empfang des globalen Geräuschpegels (Ig) im Nahbereich des Kontrollpunkts (P) umfasst, vorzugsweise kontinuierlich, vorzugsweise durch ein Geräuschmessgerät (7), und dass die Bearbeitungsphase (400) ausgeführt wird, wenn der globale Geräuschpegel (Ig), der im Nahbereich des Kontrollpunkts (P) empfangen wird, während der Dauer der Messung größer ist als ein vorbestimmter Schwellenwert.

4. Verfahren nach einem der Ansprüche 1 bis 3, **dadurch gekennzeichnet, dass**, wenn das erfasste bewegliche Objekt als Fahrzeug identifiziert wird, das Verfahren ferner eine Spezifikationsphase (600) umfasst, um ein Nummernschild (30) des Fahrzeugs (V) zu lesen, und/oder eine Kategorie zu ermitteln, zu der das Fahrzeug (V) gehört - beispielsweise in einer Gruppe von Kategorien, die Zweiräder, Leichtfahrzeuge, Nutzfahrzeuge und Schwerfahrzeuge enthält.

5. Verfahren nach einem der Ansprüche 1 bis 4, **dadurch gekennzeichnet, dass** es eine Phase des Sendens (700) an einen entfernten Standort umfasst, vorzugsweise über drahtlose Kommunikation, mindestens eines Teils der durch das Verfahren gesammelten und/oder berechneten Datenmaterialien.

6. Verfahren nach einem der Ansprüche 1 bis 5, **dadurch gekennzeichnet, dass** es die Korrektur des berechneten Geräuschpegels (I) in Abhängigkeit vom Umgebungsluftdruck und/oder der gemessenen Temperatur(en) im Nahbereich des Kontrollpunkts (P) umfasst.

7. Kontrollsystem (1) des maximalen Geräuschpegels (Imax) an einem Kontrollpunkt (P), der mit der Bewegung eines Fahrzeugs (V) auf einer Trajektorie (52) in einem Messbereich (A1) verknüpft ist, der sich in der Nähe des Kontrollpunkts (P) befindet, und dem Kontrollsystem gegenüberliegt, das eine Bearbeitungsvorrichtung (10) umfasst, und mit der Bearbeitungsvorrichtung (10) ist verbunden:
- eine erste Kamera (4), die geeignet ist, ein bewegliches Objekt in einem Identifikationsbereich (A3) zu erfassen, der sich in oder mindestens teilweise vor dem Messbereich (A1) befindet, und zu ermitteln, ob das erfasste bewegliche Objekt ein Fahrzeug ist;
- ein Messsystem, das von der Bearbeitungsvorrichtung (10) gesteuert wird, enthaltend:
-- eine zweite Kamera (5), die geeignet ist, ein visuelles Datenmaterial (301) des Messbereichs (A1) zu mindestens einem Zeitpunkt t einer Dauer der Messung zu erlangen;
-- eine akustische Antenne (2), die eine Vielzahl von Schalldrucksensoren (3) umfasst, die geeignet sind, ein akustisches Datenmaterial (302) des Messbereichs (A1) zu aufeinanderfolgenden Zeitpunkten t' der Dauer der Messung zu erlangen;
wobei die Bearbeitungsvorrichtung (10) konfiguriert ist:
-- um das Messsystem automatisch zu aktivieren, wenn es von der ersten Kamera (4) die Information erhält, dass das erfasste bewegliche Objekt als Fahrzeug identifiziert ist, und von der zweiten Kamera (5), dass das Fahrzeug (V) eine Referenzebene (P_{R}) erreicht hat, die sich, auf der Trajektorie (52), in unmittelbarer Nähe des Kontrollpunkts (P) befindet;
-- um die erlangten Datenmaterialien (302) zu bearbeiten, durch:
-- Berechnung einer Verteilung äquivalenter Geräuschquellen (40) entlang der Trajektorie (52) des Fahrzeugs (V) über den gesamten Messbereich (A1);
-- anschließend durch Ausbreitung am Kontrollpunkt (P) nur der äquivalenten Geräuschquellen (40), die sich in einem Zielbereich (A2) befinden, der im Messbereich (A1) eingeschlossen ist, der sich gegenüber der akustischen Antenne (2) befindet, und der eine Abmessung aufweist - entlang der Trajektorie (52) - die in der Größenordnung des 1- bis 3-fachen der Abmessung des Fahrzeugs (V) liegt;
durch eine Bearbeitung des Beamforming und der Dekonvolution;
um die Entwicklung des Geräuschpegels (I) am Kontrollpunkt (P) während der Dauer der Messung zu berechnen, und den maximalen Geräuschpegel (Imax) am Kontrollpunkt (P) im Wesentlichen zu einem Zeitpunkt (t_{R}) zu ermitteln, der im Wesentlichen dem Zeitpunkt entspricht, zu dem das Fahrzeug (V) die Referenzebene (P_{R}) erreicht;
-- und um zu ermitteln, anhand des visuellen Datenmaterials (301), das zum Zeitpunkt (t_{R}) erlangt wurde, ob, im Zielbereich (A2), ein und tatsächlich nur ein Fahrzeug vorhanden ist.

8. System nach Anspruch 7, **dadurch gekennzeichnet, dass** die akustische Antenne (2) eine Anordnung von N Schalldrucksensoren (3) umfasst, wie Mikrofone oder MEMS, wobei N vorzugsweise zwischen 8 und 150 oder sogar zwischen 16 und 64 liegt, wobei die Schalldrucksensoren (3) im Wesentlichen auf einer Ebene eingerichtet oder sogar im Wesentlichen ausgerichtet angeordnet sind.

9. System nach Anspruch 7 oder 8, **dadurch gekennzeichnet, dass** es ferner eine Vorrichtung zum Empfang (7) des globalen Geräuschpegels (Ig) im Nahbereich des Kontrollpunkts (P) umfasst, wie ein Geräuschmessgerät.

10. System nach einem der Ansprüche 7 bis 9, **dadurch gekennzeichnet, dass** es ferner eine Spezifikationsvorrichtung (6) umfasst, wie eine Kamera, die konfiguriert ist, um zu können, in einem Spezifikationsbereich (A4), der sich in der Nähe des Messbereichs (A1) befindet, vorzugsweise in oder mindestens teilweise nach dem Messbereich (A1) befindlich:
- Lesen eines Nummernschilds (30) eines Fahrzeugs (V);
- und/oder Ermitteln einer Kategorie, zu der ein Fahrzeug (V) gehört - beispielsweise in einer Gruppe von Kategorien, die Zweiräder, Leichtfahrzeuge, Nutzfahrzeuge und Schwerfahrzeuge enthält.

11. System nach einem der Ansprüche 7 bis 10, **dadurch gekennzeichnet, dass** es ferner ein Kommunikationssystem (9) umfasst, das konfiguriert ist, um Datenmaterialien, die von einer oder mehreren Komponenten des Kontrollsystems (1) gesammelt und/oder berechnet wurden, vorzugsweise über drahtlose Kommunikation, an einen entfernten Standort zu übertragen.

12. System nach einem der Ansprüche 7 bis 11, **dadurch gekennzeichnet, dass** es eine Wetterstation (8) umfasst, die mindestens einen Umgebungsluftdruck- und/oder Temperatursensor im Nahbereich des Kontrollpunkts (P) enthält.

13. Anlage (50), eine Fahrbahn (51) enthaltend, wie eine Straße oder einen Weg, auf dem sich ein Fahrzeug (V) gemäß einer Trajektorie (52) bewegen kann, wobei die Anlage (50) einen Pfosten (55) enthält, an dem ein Kontrollsystem (1) nach einem der Ansprüche 7 bis 12 angebracht ist, wobei der Pfosten (55) am Rand der Fahrbahn (51) angebracht ist, und die Schalldrucksensoren (3) im Wesentlichen horizontal und vorzugsweise im Wesentlichen parallel zur Trajektorie (52) des Fahrzeugs (V) ausgerichtet sind.

14. Anlage nach Anspruch 13, **dadurch gekennzeichnet, dass** die Länge des Messbereichs (A1) zwischen 10 und 50 m beträgt und/oder die Länge des Zielbereichs (A2) zwischen 4 und 8 m beträgt und/oder der Abstand zwischen der akustischen Antenne (2) und dem Zielbereich zwischen 7 und 10 m beträgt.

## Claims

1. A method for controlling the maximum sound level (Imax), at a control point (P), related to the movement of a vehicle (V) on a trajectory (52) in a measurement area (A1) located adjacent to the control point (P), comprising the following phases:
- a detection phase (100) in which, by means of a first camera (4), a moving object is detected in an identification area (A3) located in or at least partially upstream of the measurement area (A1) and it is determined whether the detected moving object is a vehicle;
- a triggering phase (200) in which, if the detected moving object is identified as a vehicle, and if the vehicle (V) reaches a reference plane (P_{R}) which is located, on the trajectory (52), closely adjacent to the control point (P), a measurement phase (300) is automatically triggered;
- a measurement phase (300), for a measurement duration substantially covering the period in which the vehicle (V) is moving in the measurement area (A1), in which:
-- at at least one instant (t_{R}) substantially corresponding to the instant in which the vehicle (V) reaches the reference plane (P_{R}), visual data (301) of the measurement area (A1) is acquired by means of a second camera (5);
-- and, at each instant t' of a discrete series of successive instants, acoustic data (302) of the measurement area (A1) is acquired by means of an acoustic antenna (2) comprising a plurality of acoustic pressure sensors (3);
- a phase of processing (400) the acquired acoustic data (302), in which:
-- the evolution of the sound level (I) at the control point (P) for the measurement duration is calculated, this calculation comprising:
--- the calculation of a distribution of equivalent sound sources (40) along the trajectory (52) of the vehicle (V) over the entire measurement area (A1);
--- then the propagation at the control point (P) only of the equivalent sound sources (40) located in a target area (A2) which is included in the measurement area (A1), located in front of the acoustic antenna (2) and which has a dimension - along the trajectory (52) - in the range of 1 to 3 times the dimension of the vehicle (V);
by a beamforming and deconvolution processing;
-- and the maximum sound level (Imax) is determined at the control point (P), substantially at the instant (t_{R});
- a validation phase (500) in which it is determined, on the visual data (301) acquired at the instant (t_{R}), whether, in the target area (A2), there is indeed one and only one vehicle (V) present.

2. The method according to claim 1, **characterized in that**, in the phase of processing (400) the acquired acoustic data (302), the minimum sound level (Imin) is determined at the control point (P) and **in that**, in the validation phase (500), it is determined whether Imax - Imin is greater than a predetermined value, for example of the order of 3 dB.

3. The method according to claim 1 or 2, **characterized in that** it comprises picking up the overall sound level (Ig) in the vicinity of the control point (P), preferably continuously, preferably by a sound level meter (7), and **in that** the processing phase (400) is carried out when the overall sound level (Ig) picked up in the vicinity of the control point (P) for the measurement duration is greater than a predetermined threshold.

4. The method according to any of claims 1 to 3, **characterized in that**, if the detected moving object is identified as a vehicle, the method further comprises a specification phase (600), for reading a license plate (30) of the vehicle (V), and/or for determining a category to which the vehicle (V) belongs - for example in a set of categories including two wheelers, light vehicles, commercial vehicles, heavy goods vehicles.

5. The method according to any of claims 1 to 4, **characterized in that** it comprises a phase of sending (700) to a remote site, preferably via wireless communication, at least part of the data collected and/or calculated by the method.

6. The method according to any of claims 1 to 5, **characterized in that** it comprises correcting the calculated sound level (I), according to the ambient atmospheric pressure and/or the temperature measured in the vicinity of the control point (P).

7. A system (1) for controlling the maximum sound level (Imax), at a control point (P), related to the movement of a vehicle (V) on a trajectory (52) in a measurement area (A1) located adjacent to the control point (P) and facing the control system, comprising a processing device (10) and, connected to the processing device (10):
- a first camera (4) capable of detecting a moving object in an identification area (A3) located in or at least partially upstream of the measurement area (A1) and of determining whether the detected moving object is a vehicle ;
- a measurement system controlled by the processing device (10), including:
-- a second camera (5) capable of acquiring visual data (301) of the measurement area (A1) at at least one instant t of a measurement duration;
-- an acoustic antenna (2) comprising a plurality of acoustic pressure sensors (3) and capable of acquiring acoustic data (302) of the measurement area (A1) at successive instants t' of the measurement duration;
wherein the processing device (10) is configured:
-- to automatically activate the measurement system when it receives from the first camera (4) the information that the detected moving object is identified as a vehicle, and from the second camera (5) that the vehicle (V) has reached a reference plane (P_{R}) which is located, on the trajectory (52), closely adjacent to the control point (P);
-- to process the acoustic data (302) acquired:
--- by calculating a distribution of equivalent sound sources (40) along the trajectory (52) of the vehicle (V) over the entire measurement area (A1);
- then by propagating at the control point (P) only the equivalent sound sources (40) located in a target area (A2) which is included in the measurement area (A1), located in front of the acoustic antenna (2) and which has a dimension - along the trajectory (52) - in the range of 1 to 3 times the dimension of the vehicle (V);
by a beamforming and deconvolution processing;
so as to calculate the evolution of the sound level (I) at the control point (P) for the measurement duration, and to determine the maximum sound level (Imax) at the control point (P) substantially at an instant (t_{R}) substantially corresponding to the instant in which the vehicle (V) reaches the reference plane (P_{R});
-- and to determine, on the visual data (301) acquired at the instant (t_{R}), whether, in the target area (A2), there is indeed one and only one vehicle present.

8. The system according to claim 7, **characterized in that** the acoustic antenna (2) comprises an array of N acoustic pressure sensors (3), such as microphones or MEMS, where N is preferably between 8 and 150, or even between 16 and 64, the acoustic pressure sensors (3) being arranged substantially on a plane or even disposed in a substantially aligned manner.

9. The system according to claim 7 or 8, **characterized in that** it further comprises a device (7) for picking up the overall sound level (Ig) in the vicinity of the control point (P), such as a sound level meter.

10. The system according to any of claims 7 to 9, **characterized in that** it further comprises a specification device (6), such as a camera, configured to be capable of, in a specification area (A4) located adjacent to the measurement area (A1), preferably located in or at least partially downstream of the measurement area (A1):
- reading a license plate (30) of a vehicle (V);
- and/or determining a category to which a vehicle (V) belongs -for example in a set of categories including two wheelers, light vehicles, commercial vehicles, heavy goods vehicles.

11. The system according to any of claims 7 to 10, **characterized in that** it further comprises a communication system (9) configured to transmit to a remote site, preferably via wireless communication, data collected and/or calculated by one or several components of the control system (1).

12. The system according to any of claims 7 to 11, **characterized in that** it comprises a meteorological station (8) including at least one sensor of the ambient atmospheric pressure and/or of the temperature in the vicinity of the control point (P).

13. An installation (50) including a traffic lane (51), such as a road or a street, on which a vehicle (V) may move along a trajectory (52), the installation (50) including a post (55) on which a control system (1) according to any of claims 7 to 12 is fastened, the post (55) being fastened to the edge of the traffic lane (51), and the acoustic pressure sensors (3) being substantially aligned horizontally and preferably substantially parallel to the trajectory (52) of the vehicle (V).

14. The installation according to claim 13, **characterized in that** the length of the measurement area (A1) is between 10 and 50 m, and/or the length of the target area (A2) is between 4 and 8 m, and/or the distance between the acoustic antenna (2) and the target area is between 7 and 10 m.
